# EUROPEAN PATENT APPLICATION

(11) **EP 1 881 448 A1**
(43) Date of publication of application: **23.01.2008**
(21) Application number: 07001850.2
(22) Date of filing: 29.01.2007
(51) Int. Cl.: G06Q 10/00, G06K 17/00, G06K 7/00

(54) **Method and apparatus for certifying delivery of an item**

(30) Priority: 19.07.2006 WO PCT/IT2006/000549
(71) Applicant: TNT Post Italia S.p.A., 20121 Milano (IT)
(72) Inventor: Codiglione, Pietro, 20121 Milano (IT)
(74) Representative: Simino, Massimo

(57) **Abstract**

A method for certifying delivery of an item (10) to a delivery location (LOC), the item (10) having identification means (11). The method comprises the steps of detecting the identification means (11), acquiring time data (TIME, DATE) of the time of delivery of the item (10) to the delivery location (LOC), acquiring the geographical coordinates (LONG, LAT) of the delivery location (LOC), and associating the geographical coordinates (LONG, LAT) to the detected identification means (11). The method further comprises notification of delivery information and relevant service levels to the customer associated to the detected identification means (11).

## Description

This invention concerns a method and an apparatus for certifying delivery of an item.

In prior art, many methods are known for tracking delivery of items, particularly delivery of mailpieces such as envelopes, parcels, and the like. A prior art method for delivering mail to a recipient and tracking delivery thereof contemplates application of a barcode to the mailpiece to be delivered, such as an envelope, and reading of such barcode upon delivery of the envelope to the recipient. For this purpose, the delivery man has a barcode reader to be used to read the barcode on the envelope delivered to the recipient.

As the barcode is read, reading time data, i.e. the date and time at which the barcode on the envelope is read, is detected or input by the delivery man. By associating the barcode with the barcode reading date and time, a receipt with the date and time of delivery of the envelope is provided to the mailer.

Barcode reading is also used for logistics and envelope traceability during the various mail sorting steps, for tracking the mail through the various sorting and delivery points.

While barcode reading at the time of delivery of an envelope provides certainty as to the date and time of delivery, there is still no certainty as to actual mail delivery to the delivery address of the recipient, as stated on the envelope.

The probative value, or certification, of delivery to the recipient is only given by the recipient's signature, affixed upon delivery, next to the delivery date and time specification, which may be manually input by the delivery man. This method is not applicable if the recipient or the person in charge of receiving mail is absent, or if mail is left in the recipient's mailbox. The above method requires the physical presence of the recipient or a trustworthy person, who should affix a signature to certified delivery of the envelope.

Therefore, a need arises of providing a method that allows to certify delivery of an item, such as a mailpiece, to the delivery address of the recipient, even when he/she or the person charged by him/her to receive the item, is absent, and even when the item is delivered to the mailbox of the recipient.

Therefore, the object if this invention is to provide a method for certifying delivery of an item to the delivery location, that has such features as to fulfill the above needs, while obviating the drawbacks of prior art.

The above object is achieved by a method for certifying delivery of an item as defined in claim 1.

In another aspect, the object is achieved by an apparatus for certifying delivery of an item as defined in claim 9.

Further features and advantages of the method and apparatus for certifying delivery of an item according to this invention, will be apparent from the following description of one preferred embodiment thereof, which is given by way of illustration and without limitation with reference to the accompanying figures, in which:

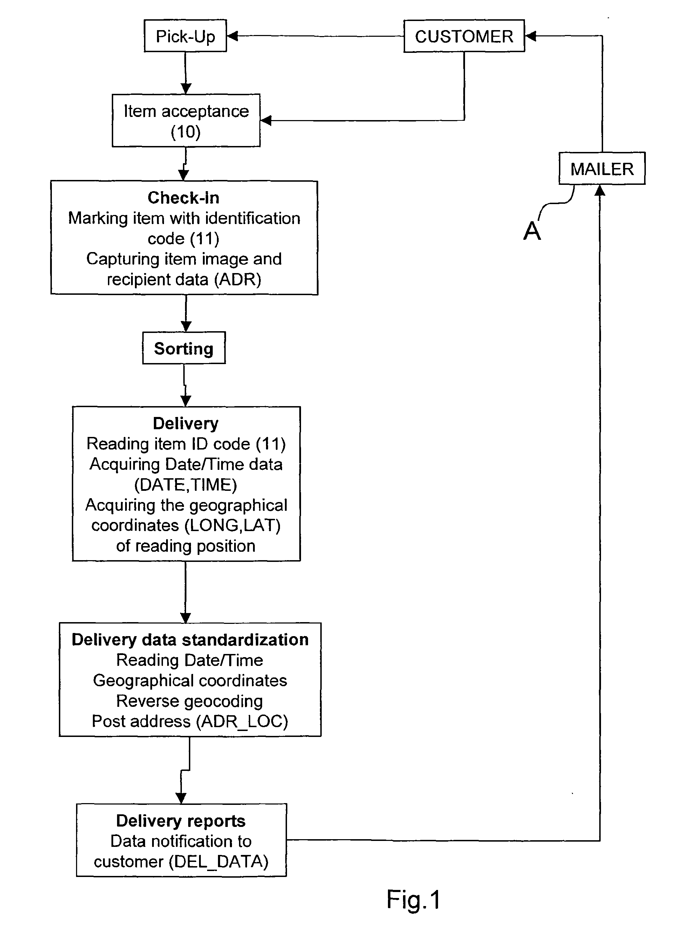

- Figure 1 is a block diagram of the method for certifying delivery of an item according to the present invention,
- Figure 2 is a block diagram showing the steps of pick-up, acceptance and check-in of Figure 1 for items to be marked,
- Figure 3 is a block diagram showing the steps of pick-up, acceptance and check-in of Figure 1 for marked items,
- Figure 4 is a block diagram of the delivery step of Figure 1,

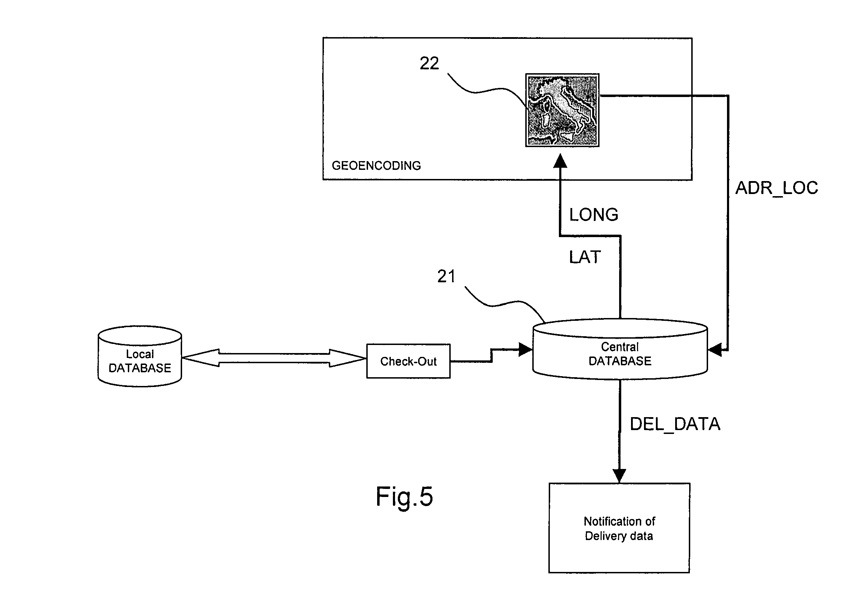

- Figure 5 is a block diagram of the steps of delivery data standardization and delivery report generation of Figure 1,

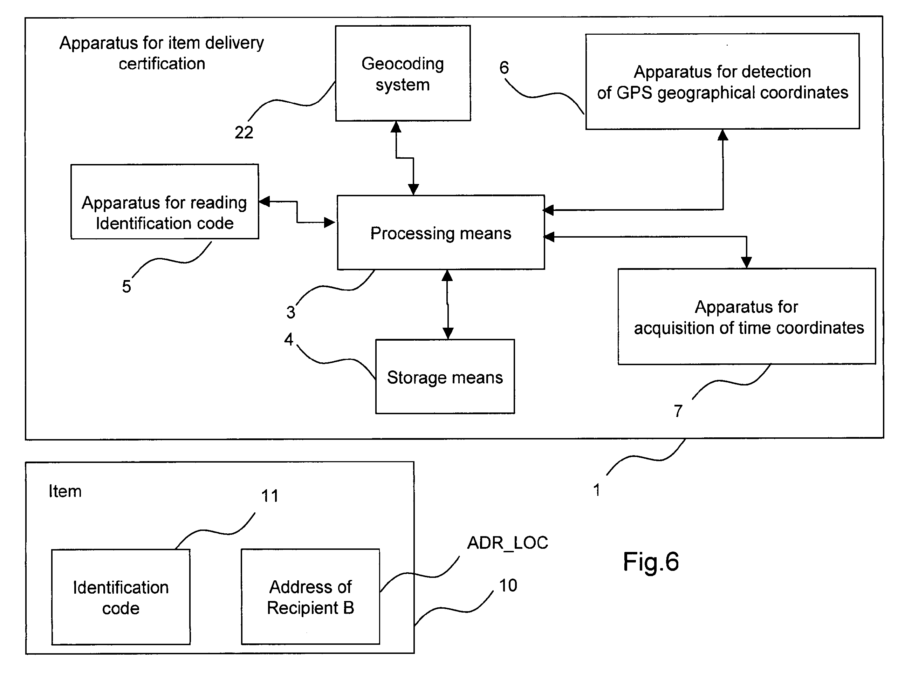

- Figure 6 is a block diagram of an apparatus for certifying delivery of an item according to the present invention.

The method of this invention allows to certify delivery of an item 10 to a delivery location LOC.

The item 10 has identification means 11, whose function will be described in greater detail Hereinbelow. Advantageously, the identification means 11 are of the barcode type. Otherwise, different means may be provided for identification of the item 10, such as a RFID code or other types of identification codes, which can establish a unique relation with the item 10 and can be detected for identification of such item.

As the item 10 is delivered to a delivery location LOC, the method of this invention contemplates the steps of detecting the identification means 11 and acquiring the time data TIME, DATE of the delivery of the item 10 to the delivery location LOC.

To the purpose of certifying delivery of the item 10 to the delivery location LOC, the method contemplates acquisition of the geographical coordinates LONG, LAT of the delivery location LOC and association of such geographical coordinates LONG, LAT with the previously detected identification means 11.

Hence, the probative value of delivery of the item 10 is given by the detection of the geographical coordinates LONG, LAT of the delivery location LOC where the item 10 is delivered. These geographical coordinates LONG, LAT shall be associated to the detected identification means 11 so that each delivered item 10 has its respective geographical coordinates LONG, LAT, to provide geographical certification of the delivery of each delivered item.

Advantageously, the method of this invention comprises the steps of processing the geographical coordinates LONG, LAT of the delivery location LOC for determining the address ADR_LOC of the delivery location LOC. Hence, the probative value of delivery of the item 10 is given by the address ADR_LOC of the delivery location LOC associated to the geographical coordinates LONG, LAT.

Thus, the acquisition of the geographical coordinates LONG, LAT of the delivery location LOC for the item 10 apparently provides certification of delivery of the item, particularly when the recipient is absent and when the item 10 is delivered to a mailbox.

According to a preferred embodiment, the time data TIME, DATE includes the time TIME and the date DATE of delivery of the item 10 to the delivery location LOC.

Advantageously, the method may comprise the steps of acquiring a date of acceptance DATE_IN of the item 10 to be delivered and providing a preset delivery time value SET_TIME. This allows to determine the actual item delivery time DEL_TIME as a difference between the date of acceptance DATE_IN of the item 10 and the actual delivery date DATE. The actual delivery time DEL_TIME and preset delivery time SET_TIME data for the item 10 may be provided to the mailer A to inform the mailer A whether the predetermined delivery terms have been met or not.

Advantageously, the step of acquiring the geographical coordinates LONG, LAT is carried out in response to the step of detecting the identification means 11. Thus, any error in the acquisition of the geographical coordinates LONG, LAT of the delivery location is prevented.

Likewise, the step of acquiring the time data TIME, DATE of the time of delivery of the item 10 to the delivery location LOC is carried out in response to the step of detecting the identification means 11.

In a manner known per se, the item 10 has a mailer A and a delivery address ADR of a recipient B. In order to certify delivery of the item 10 to the mailer A, a unique association has to be determined between the mailer A and the item 10. Advantageously, this association is provided by the identification means 11.

By this way, the geographical coordinates LONG, LAT and the time data TIME, DATE acquired for the item 10 and associated to the identification means 11 may be provided to the mailer A as uniquely identified by the identification means 11 detected upon delivery of the item 10 to the delivery location LOC.

For association of the mailer A with the identification means 11, it will be understood that the identification means 11 may be affixed to the item 10 by the mailer A or by a third party entrusted with the deliver of the item 10, such as a postal service operator, in a step of check-in of the item 10 which obviously precedes the step of delivery of the item 10.

Advantageously, the step of checking in the item 10 may contemplate the capture of an image of the item 10 and the data of the recipient B.

The geographical coordinates LONG, LAT and the time data TIME, DATE determine the delivery data DEL_DATA of the item 10, which are transmitted to the mailer A, to certify delivery of the item 10.

As mentioned above, the method of this invention comprises the steps of processing the geographical coordinates LONG, LAT of the delivery location LOC for determining the address ADR_LOC of the delivery location LOC. In this case, the delivery data DEL_DATA for the item 10 provided to the mailer A further includes such address ADR_LOC of the delivery location LOC.

The geographical coordinates LONG, LAT of the delivery location LOC may be acquired by detecting a global positioning signal, such as a GPS signal, and processing such GPS signal to obtain a longitude value LONG and a latitude value LAT for the delivery location LOC.

The address ADR_LOC of the delivery location LOC may be determined by geocoding the geographical coordinates LONG, LAT of the delivery location, e.g. by GIS platforms which are known per se and will not be described in detail.

In case of failed delivery of one or more items, the identification means of such undelivered items may be detected and associated to an identification code of a reason for failed delivery.

The method for certifying delivery of the item 10 according to the present invention may be incorporated in a prior art tracking and traceability system for an item 10.

An application of the method for certifying delivery of an envelope as a mailpiece will be described hereinbelow. Particularly, ordinary mail and registered mail will be considered as mailpiece types, but it will be understood that the method of the invention may be used for any other type of item.

The method may be implemented by various mail delivery bodies. In the example described above, the method is implemented by a postal service operator, hereafter designated for simplicity as postal operator.

In a first pick-up step, the postal pperator receives one or more envelopes from one or more mailers, to be delivered to respective delivery addresses of recipients.

As the postal pperator receives the envelopes, the acceptance step is carried out, by acquisition of the acceptance date DATE_IN, which will be later used for determining the service level. Particularly, the service level is determined by providing a preset delivery time SET_TIME to be compared with the actual delivery time DEL_TIME between the acceptance date DATE_IN and the delivery date DATE.

The envelopes received by the postal operator may be divided into envelopes to be delivered with the method of the present invention and envelopes to be handled by a normal postal service, i.e. another postal operator. The envelopes may be handed over to the postal operator by the mailer or an intermediary, otherwise there may be a mail pickup step at the mailer's or intermediary's premises. As the case may be, the mailer or intermediary will be identified as customers by the postal operator.

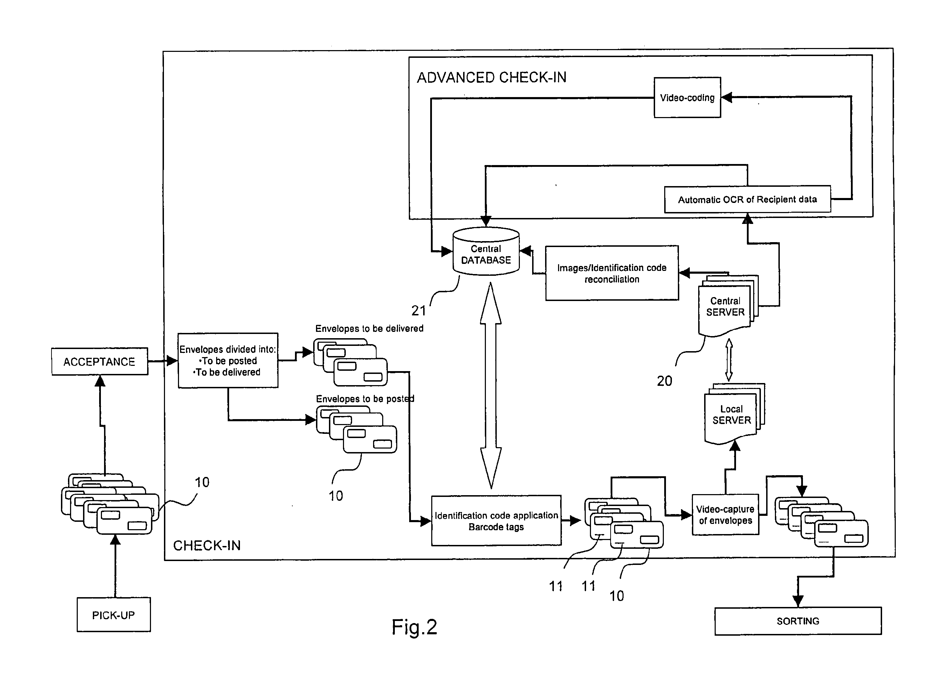

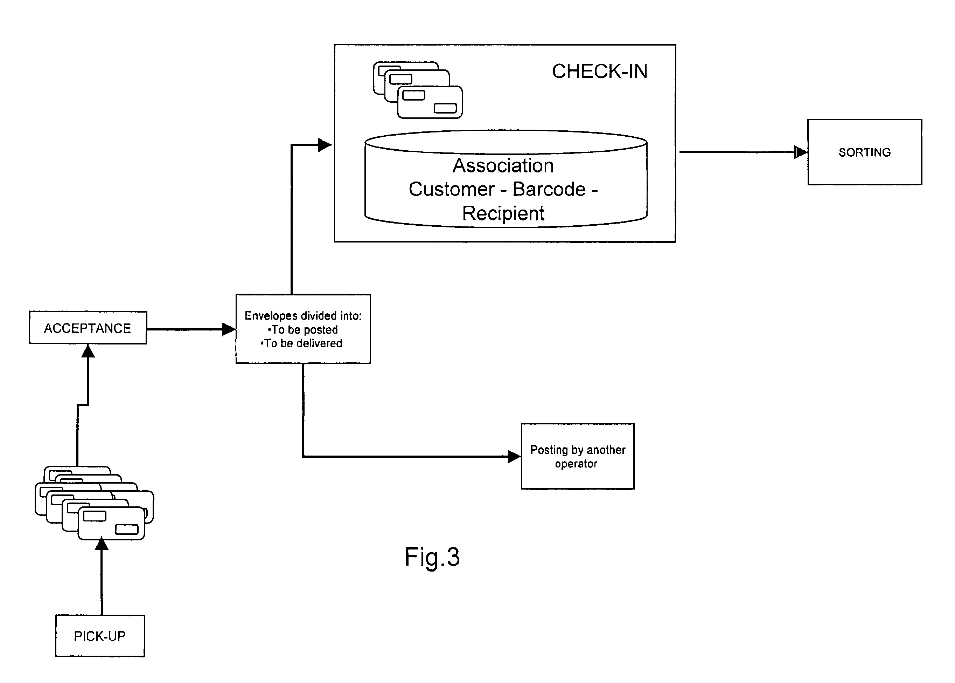

Once the mail, in this example the envelope 10 to be delivered to the delivery address ADR has been received, such envelope 10 has to be uniquely identified. For this purpose, the postal operator affixes a barcode 11 on the envelope 10 or marks the envelope 10 with the barcode 11, if the envelope has no barcode on it (see Figure 2), or receives the barcode 11 affixed on the envelope 10, if the envelope already has a barcode on it (see Figure 3). If the envelope is handed over with no barcode on it and is marked by the postal operator, then the barcode - customer/mailer association is handled by the postal operator, whereas if the envelope is already marked, then the barcode is required to belong to a class that has been uniquely assigned to the customer and/or the customer is required to provide a journal with a list of the identification codes it used for the mail it hands over for delivery.

The barcode 11 on the envelope 10, affixed either by the postal operator or by the mailer or an intermediary, is essential for unique identification of the envelope 10, because it ensures its identity and allows association thereof with the customer/mailer, as well as further performance of the next steps of the envelope delivery certification method.

The barcode 11 may be affixed by printing a barcode 11 on a portion of the envelope 10 or by applying a label with the barcode 11 printed on it or another type of label suitable for the identification technology in use (passive RFID label, etc.). If the mail is handed over electronically, the barcode may be printed on the first page of the letter and be visible from the envelope window, dedicated to the delivery address of the recipient.

If barcode ID codes are used, one-dimensional, two-dimensional, black-and-white or color barcodes may be used, depending on the amount of information to be coded.

To ensure univocity of the envelope 10, the barcode 11 has to be unique in the delivery system. Particularly, the barcode 11 may be a unique, unrepeatable element of a general barcode class (using a predetermined algorithm, e.g. a postal operator prefix, a progressive number and a postage type-characteristic suffix) or a customer-dedicated class (using a predetermined algorithm, e.g. a customer code, a progressive number and a suffix).

The barcode is affixed by a printing device, such as an applicator of precompiled barcode labels or a barcode printer, notwithstanding other technologies adapted for other types of identification codes.

If the barcode 11 is a unique and unrepeatable element of a customer-preassigned class, the association of the envelope 10, the barcode 11 and the mailer A is of the implicit type. If the barcode 11 is a unique and unrepeatable element of a general class used for multiple customers, such barcode 11 has to be expressly associated to the mailer A. If the envelope 10 has been marked by the postal operator to guarantee the identity of the envelope 10 on which the barcode 11 has been affixed, an image of the envelope has to be digitally captured after marking, with the image of the envelope 10 being associated to the barcode 11. For this purpose, a video capture system can be used, such as a camera and/or a scanner, to acquire an image of the envelope 10 and store it. The image of the envelope 10 may be associated to the barcode 11 either by software means, reading the image and recognizing the barcode 11, or by barcode readers or other devices adapted to the type of identification means in use.

Envelope images may be submitted to OCR/ICR reading and optional videocoding for transcoding of destination data ADR and correction of any OCR reading errors. This step allows the mailer/customer A to make researches on recipient personal data, such as the name and delivery address ADR, to check delivery of its envelopes and allows the postal operator This step is designated in Figure 2 as advanced chek-in.

If the envelopes are handed over to the postal operator in premarked form (Figure 3), i.e. already with the barcode on it, the barcode 11 is printed/affixed to the envelope by the customer or an intermediary. Application of the barcode to the envelope is under the responsibility of the customer/mailer, wherefore the method does not typically contemplate capture of the envelope image, unless expressly requested by the customer/mailer.

In any case, the customer/mailer shall provide class rules to the postal operator, for determination of its barcodes by a regular unambiguous and unique expression allowing to track the mailer/customer associated to a barcode.

If the customer/mailer cannot ensure uniqueness of its own barcodes, mail can be degraded from premarked mail, i.e. with a barcode on it, to mail to be marked, i.e. with no barcode on it. This will require the operator either to obtain authorization from the customer, as the presence of two barcodes on the envelope may not be desired and/or allowed, or to have the customer change the barcode to make it unique, e.g. by introduction of a prefix/suffix. If the envelopes are handed over by the customer or its intermediary in premarked form, it is advantageous to receive from the customer a list of barcodes with individual associations of each envelope, its barcode and associated recipient, to guarantee the identity of envelopes. Alternatively, envelopes may be anyway digitized to guarantee their identity by association between the envelope barcode and the envelope image.

Sorting of the mail to the various destinations of the mail handed over by the mailer to the postal operator is known per se and will note be described in detail. However, it shall be noted that sorting of mail to the various acceptance and delivery towns also occurs by bar coding and sack recognition from specific barcodes. Sack reception is performed by acceptance operators through optical reading of barcodes. Sack contents may be tracked both as cumulative amounts (type/amount of envelopes per customer) and as unique items, using a list of the barcodes of the envelopes in the sack.

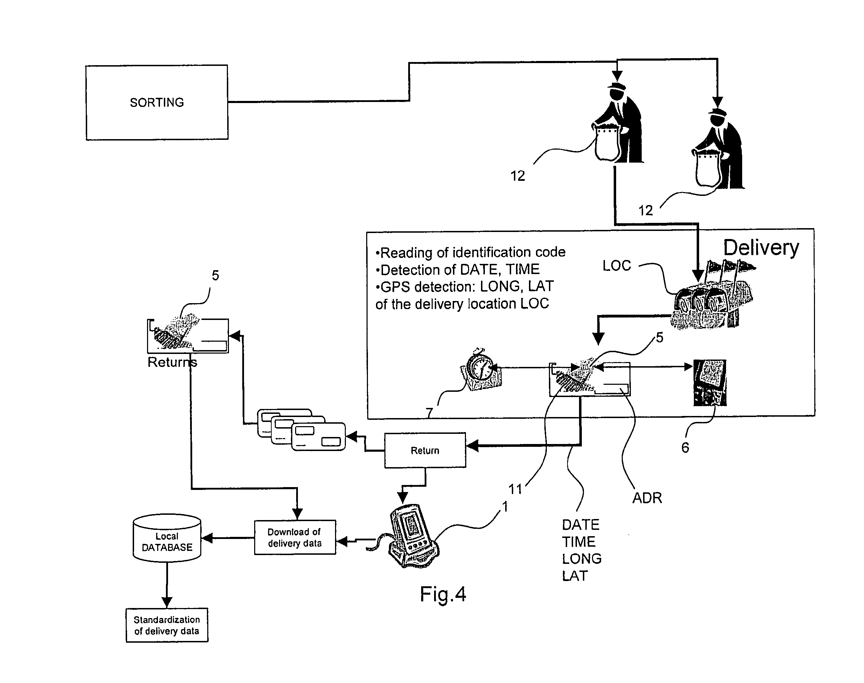

Next, the envelope 10 is delivered to a delivery location LOC (see Figure 4). This step is typically performed by an employee of the postal Operator, such as a postman 12.

When the envelope 10 is delivered, i.e. at the delivery location LOC, the postman detects the barcode 11 on the envelope 10.

Delivery of the envelope 10 to the delivery address ADR is thus advantageously certified by acquisition of the geographical coordinates of the delivery location LOC, typically the longitude LONG and the latitude of the delivery location LOC, and the time data, such as the time TIME and the date DATE of detection of the barcode 11.

Detection of the barcode 11 substantially has the function to trigger the acquisition of the geographical coordinates LONG, LAT of the delivery location LOC and the time data TIME, DATE of the time at which the barcode 11 is detected.

The geographical coordinates LONG, LAT and the time data TIME, DATE acquired are associated to the barcode 11 to track the delivery data DEL_DATE of the envelope 10.

As mentioned above, the method may contemplate the comparison between the preset delivery time value SET_TIME and the actual time of delivery DEL_TIME of the envelope 10, which is given by the difference between the date of delivery DATE of the envelope 10 to the delivery location LOC and the date of acceptance DATE_IN of the envelope 10. This allows to inform the mailer/customer A whether the predetermined delivery terms have been met or not.

The barcode 11 is detected by reading the barcode on the envelope 10 using a barcode reader 5, which is integrated, in this example, in a portable apparatus or terminal 1 used by the postman. The technology of the apparatus 1 is dependent on the type of identification codes that are usefully used.

The apparatus 1 comprises detection means 5 for detecting the barcode 11 upon delivery of the item 10 to the delivery location LOC, and clock means 7 adapted to provide the time data TIME, DATE of the time of delivery of the item 10 to the delivery location LOC.

To certify delivery of the item 10, the apparatus 1 has global positioning signal receiver means 6, such as a GPS receiver device, for detecting the geographical coordinates LAT, LONG of the delivery location LOC, and processing means 3 connected to the detection means 5 and to the global positioning signal receiver means 6 to associate the geographical coordinates LAT, LONG to the barcode 11 of the item 10.

Advantageously, the global positioning signal receiver means 6 and the clock means 7 are connected to the detection means 5 and may be actuated in response to the detection of the barcode 11 by said detection means 5.

Upon detection of the barcode 11, if the GPS receiver 6 cannot detect the geographical coordinates due to poor signal conditions, then the software in the apparatus 1 stores the detected barcodes having no geographical indication associated thereto and acquires the geographical coordinates, automatically or upon a special actuation signal, as soon as the GPS receiver 6 detects the GPS signal. This occurs, for example, when barcode detection occurs in entrance halls or environments in which there is no GPS signal. In this case, the GPS signal or the geographical coordinates are acquired by the apparatus 1 at the exit of the building, with no intervention by the postman. Each GPS detection is accompanied by a time identification, which is always provided by the clock means 7 in response to GPS signal acquisition. The comparison between the time TIME of detection of the identification means 11 by the detection means 5 and the time of detection of the geographical coordinates LONG, LAT by the receiver means 6 allows to evaluate the delay in the acquisition of the geographical coordinates LONG, LAT with respect to the detection of the identification means 11 and to determine a reliability index for the geographical position. After downloading the data, the central processing system will perform the required interpolations to increase the accuracy of geographical associations based on GPS-tracked postman track.

The apparatus 1 may advantageously comprise a device for automatic actuation of identification code reading (e.g. using a proximity sensor and timed switching off of the barcode reader), a memory for storage of the delivery data of a predetermined number of deliveries, an alphanumeric keypad or a touch screen display for manual data input, a GSM, GPRS or UMTS card for two-way communication with a central server 20, an Ethernet, Wi-Fi, USB interface for connection to the central server 20, rechargeable long-life batteries.

To allow provision of delivery data DEL_DATA to the mailer A, the apparatus 1 comprises storage means 4 connected to the processing means 3, and adapted to store the time data TIME, DATE, the geographical coordinates LAT, LONG and the detected barcode 11.

The delivery data DEL_DATA is initially stored in the apparatus 1 and later transmitted to the central server 20 with a storage area 21 being dedicated to storage of the delivery data DEL_DATA. The transmission of the delivery data DEL_DATA may occur in wireless mode, e.g. via GMS, GPRS or UMTS, during the mail delivery tour of the postman or when the postman returns to the mail sorting center. In the latter case, Wi-Fi networks will be used for automatic data download via FTP during battery recharging or multiple position support bases 2 for Ethernet/TCP connection of the apparatuses 1 of the individual postmen to the central server 20 and for later upload of delivery data DEL_DATA to the central server 20.

The delivery data DEL_DATA stored or uploaded to the central server for the delivered envelopes 10 includes the detected barcodes 11, the date DATE and time TIME acquired upon detection of each barcode 11 and the geographical coordinates LONG, LAT acquired upon detection of each barcode 11, possibly with their own date and time data, if GPS detection did not occur upon detection of the identification means.

Advantageously, the delivery data DEL_DATA includes a postman code COD_P which defines the delivery man for a predetermined mail batch, and particularly for the delivered envelope 10 which is associated to the detected barcode 11 and is part of the delivery data DEL_DATA.

In order to trace all mail from a mailer A, i.e. both delivered and undelivered, i.e. returned mail, the method of this invention contemplates detection of the barcodes on returned, i.e. undelivered envelopes. In case of returns, an operator may detect the associated barcodes and indicate the reason for the return (see Figure 4). Failed delivery may be caused, for example, to a change of address of the recipient or to an error in the delivery address ADR.

In the case of registered mail, delivery is preceded by a step of preparation of a delivery note and, when appropriate, of an acknowledgement of receipt.

Preparation of the delivery note includes the steps of reading the barcode on the envelope, printing the note for each postman, and printing the return card, if any. The data to be affixed on the note is retrieved from the central server and may contain the envelope barcode, the recipient data or the miniature image of envelope window, as well as a space for the date and signature of the person that receives the registered letter.

Regardless of the postage type, for the customer to be informed of the date of time TIME and date DATE of delivery of an envelope 10, and the location LOC of delivery of the envelope 10, for the purpose of certifying to the customer A the delivery of the envelope 10 to the delivery address ADR on the envelope 10, the delivery data DEL_DATA is provided to the mailer A.

Now, a comparison is made between the preset delivery time value SET_TIME and the actual time of delivery DEL_TIME of the envelope 10, which is given by the difference between the date of delivery DATE of the envelope 10 to the delivery location LOC and the date of acceptance DATE_IN of the envelope 10, so that the mailer/customer A may be informed whether the predetermined delivery terms have been met or not.

Advantageously, the delivery data DEL_DATA and, when appropriate, the return data, are associated to the mailer using the barcode, to allow the mailer to access the delivery data DEL_DATA using the barcode of a single envelope or an envelope batch.

The delivery data DEL_DATA may be associated, through the barcode 11, to the envelope image, if such image has been stored during check-in of the envelope, to the acceptance date DATE_IN, to the recipient data if the envelopes have been videocoded or if the customer has provided a list of association between the barcodes and the destination addresses.

Advantageously, the method includes the steps of processing the geographical coordinates LONG, LAT by a reverse geocoding system (GIS) 22 which allows to determine the address ADR_LOC of the delivery location LOC associated to the geographical coordinates LONG, LAT (Figure 4). In this case, the delivery data DEL_DATA also includes the address ADR_LOC of the delivery location LOC as determined above by the reverse geocoding system. Thus, besides geographical certification of delivery of the envelope 10, obtained using the geographical coordinates LONG, LAT of the delivery location LOC, the customer/mailer A is also aware of the mail address ADR_LOC of the delivery location LOC interpolated from the cartography by reverse geocoding and can thus control any inconsistency between the delivery address ADR of the envelope 10 and the address ADR_LOC of the location LOC where the envelope has been actually delivered.

For delivered registered letters, the steps may be provided of scanning the delivery note with the signatures on it, scanning the receipt notice and uploading the images obtained thereby to the central server for later transmission to the customer or Web publication for the customer.

The delivery data DEL_DATA may be transmitted or notified to the mailer. The delivery data DEL_DATA may be provided to the customers/mailers, for instance, on a Web site for direct consultation and/or periodically transferred to the customer, e.g. in XML/XLS/MDB format, via FTP/HTTP.

The customer may access the delivery data DEL_DATA using search keys for the type of treatment associated to the relevant mail type. Such search keys may include, for instance, the barcode 11, the envelope acceptance date DATE_IN and the envelope acceptance town, the delivery date DATE and time TIME, the address ADR_LOC of the delivery location LOC provided by the reverse geocoding system, the personal data of the recipient B, if OCR acquisition and videocoding of the envelope image has been enabled, or if the customer has provided a specific list upon acceptance of the mail, free search keys as specified by the customer in the check-in list provided by the customer with the barcode list for the mail handed over to the operator.

The search option that uses the personal data of the recipient typically applies to registered mail, although this operation may also apply to any other mail type. If optical scanning or acquisition of the envelope image has been provided, such image is made available to the user and may be displayed on the Web or uploaded via FTP/e-mail.

In the case of registered mails, the images of the delivery note and the delivery notice, if any, are also provided, and may be displayed in association with the relevant envelope 10 on the web or uploaded via FTP.

Advantageously, service levels for the specific postage and service types may be measured based on the date of acceptance of the envelope and on the delivery date associated to the envelope.

Any notification to the customer, whether of the interactive type, by direct and voluntary consultation of the web site, or of the batch type, by FTP or e-mail upload, is strictly selective, and complies with such safety policies as to ensure total respect of the privacy of customers, as well as their mailers and recipients.

Il will be appreciated from the above that the method and apparatus of the invention allow to certify delivery of an item.

The detection of an identification code of the item upon delivery of the item, as circumstantiated by date and time, and by the geographical coordinates of the delivery location, provides the probative value of delivery certification, especially when the item is designed to be delivered to the mailbox of the recipient and when the recipient is absent.

The method of this invention further allows to notify to the customer the time data of item delivery and to inform the customer whether the agreed delivery terms have been met.

Those skilled in the art will obviously appreciate that a number of changes and variants may be made to the method and apparatus of the invention as described hereinbefore to meet specific needs, without departure from the scope of the invention, as defined in the following claims.

## Claims

1. A method for certifying delivery of an item (10) to a delivery location (LOC), said item (10) having identification means (11), said method comprising the steps of:
- detecting said identification means (11),
- acquiring time data (TIME, DATE) at the time of delivery of said item (10) in said delivery location (LOC),
said method further comprising the steps of:
- acquiring the geographical coordinates (LONG, LAT) of said delivery location (LOC), and
- associating said geographical coordinates (LONG, LAT) to said identification means (11) of said item (10).

2. A method as claimed in claim 1, wherein said step of acquiring the geographical coordinates (LONG, LAT) is carried out in response to said step of detecting said identification means (11).

3. A method as claimed in claim 1 or 2, wherein said step of acquiring the time data (TIME, DATE) of the time of delivery of said item (10) to said delivery location (LOC) is carried out in response to said step of detecting said identification means (11).

4. A method as claimed in any one of claims 1 to 3, wherein said item (10) has a mailer (A) and a delivery address (ADR), said identification means (11) being adapted to associate said item (10) to said mailer (A), said geographical coordinates (LONG, LAT) and said time data (TIME, DATE) defining the delivery data (DEL_DATA) of said item (10), said method comprising the step of providing said delivery data (DEL_DATA) to said mailer (A) associated to said detected identification means (11).

5. A method as claimed in claim 4, further comprising the steps of:
- processing said geographical coordinates (LONG, LAT) to determine the address (ADR_LOC) of the delivery location (LOC), said delivery data (DEL_DATA) of said item (10) further comprising said address (ADR_LOC) of the delivery location (LOC),
- providing said delivery data (DEL_DATA) to said mailer (A).

6. A method as claimed in any one of claims 1 to 5, wherein said step of acquiring the geographical coordinates (LONG, LAT) of said delivery location (LOC) comprises the steps of:
- detecting a global positioning signal,
- processing said global positioning signal to obtain the longitude (LONG) and the latitude (LAT) of said delivery location (LOC).

7. A method as claimed in any one of claims 1 to 6, wherein said time data (TIME, DATE) includes the time (TIME) and the date (DATE) of delivery of the item (10) to said delivery location (LOC).

8. A method as claimed in claim 7, comprising the steps of:
- acquiring a date of acceptance (DATE_IN) of said item (10) to be delivered,
- providing a preset delivery time value (SET_TIME),
- determining the actual delivery time (DEL_TIME) for said item as a difference between said date of acceptance (DATE_IN) and said delivery date (DATE),
- providing said actual delivery time (DEL_TIME) and said preset delivery time (SET_TIME) for said item (10) to the mailer (A) of said item (10).

9. An apparatus (1) for certifying delivery of an item (10) to a delivery location (LOC), said item (10) having identification means (11), said apparatus (1) comprising:
- detection means (5) for detecting said identification means (11) upon delivery of said item (10) to a delivery location (LOC),
- clock means (7) for providing the time data (TIME, DATE) of the time of delivery of said item (10) to said delivery location (LOC),
said apparatus (1) being **characterized in that** it comprises:
- global positioning signal receiver means (6) for detecting the geographical coordinates (LAT, LONG) of said delivery location (LOC),
- processing means (3) connected to said detection means (5) and said global positioning signal receiver means (6) for associating said geographical coordinates (LONG, LAT) to said identification means (11) of said item (10).

10. An apparatus as claimed in claim 9, wherein said global positioning signal receiver means (6) are connected to said clock means (7) for acquiring the time data of the detection of said geographical coordinates (LAT, LONG) in response to the detection of the global positioning signal by said global positioning signal receiver means (6).

11. An apparatus (1) as claimed in claim 9 or 10, wherein said global positioning signal receiver means (6) and said clock means (7) are connected to said detection means (5) and may be actuated in response to the detection of said identification means (11) by said detection means (5).

12. An apparatus (1) as claimed in any one of claims 9 to 11, comprising storage means (4) connected to said processing means (3) and adapted to store said time data (TIME, DATE), said geographical coordinates (LAT, LONG), and said identification means (11) of said item (10).
